# EUROPÄISCHE PATENTSCHRIFT

(11) **EP 3 227 550 B1**
(45) Veröffentlichungstag und Bekanntmachung des Hinweises auf die Patenterteilung: **17.10.2018**
(21) Anmeldenummer: 15787596.4
(22) Anmeldetag: 30.10.2015
(51) Int. Cl.: F03B 3/06, F03B 3/18, F15B 15/14

(54) **HYDRAULISCHE STRÖMUNGSMASCHINE**
HYDRAULIC TURBOMACHINE
TURBOMACHINE HYDRAULIQUE

(30) Priorität: 01.12.2014 DE 102014224480
(43) Veröffentlichungstag der Anmeldung: 11.10.2017
(73) Patentinhaber: Voith Patent GmbH, 89522 Heidenheim (DE)
(72) Erfinder: POPELKA, Thomas, A-3390 Melk (AT); SCHABASSER, Martin, A-3123 Pfaffing (AT)
(86) Internationale Anmeldenummer: PCT/EP2015/075210
(87) Internationale Veröffentlichungsnummer: WO 2016/087135

(56) Entgegenhaltungen:
- DE-B- 1 000 299
- JP-A- S59 155 574
- JP-A- S61 142 368
- JP-A- 2001 227 446
- US-A- 1 706 372

## Beschreibung

Die Erfindung betrifft eine hydraulische Strömungsmaschine, insbesondere eine Wasserturbine, Pumpturbine oder Pumpe, gemäß dem Oberbegriff von Anspruch 1. Dabei kann es sich um Maschinen der Francis-Bauart oder der Kaplan-Bauart oder um sonstige Maschinen handeln. Wesentlich ist, dass es um Maschinen mit einem Leitapparat geht.

Als Beispiel wird auf US1706372 verwiesen.

Der Leitapparat einer solchen Strömungsmaschine umfasst eine Vielzahl von Leitschaufeln welche das Laufrad umschließen. Die einzelnen Leitschaufeln sind drehbar gelagert und können jeweils um eine Achse, die parallel zur Laufradachse verläuft, geschwenkt werden. Auf diese Weise kann der Wasserdurchfluss durch die hydraulische Strömungsmaschine reguliert werden. Dabei sind die Leitschaufeln mittels Hebeln und Lenkern an einem Regelring befestigt. Der Regelring ist konzentrisch zur Laufradachse drehbar gelagert. Wird der Regelring gedreht, so werden die Leitschaufeln um ihre jeweilige Drehachse verdreht. Die Drehung des Regelrings wird mit wenigstens einem hydraulischen Servomotor bewerkstelligt, der so zwischen Regelring und einem feststehenden Gehäuseteil befestigt ist, dass der Regelring verdreht wird, wenn der Kolben des Servomotors bewegt wird.

Da zur Bewegung je nach Betriebszustand erhebliche Kräfte aufgewendet werden müssen, sind die hydraulischen Servomotoren in der Regel sehr groß und damit auch teuer. Außerdem wird als Hydraulikflüssigkeit in der Regel Mineralöl eingesetzt. Aufgrund der Größe der Servomotoren wird eine nicht unerhebliche Menge von Hydrauliköl für den Betrieb benötigt. Dieses Öl kann im Fehlerfall zu einer Umweltverschmutzung führen.

Der Erfindung liegt die Aufgabe zugrunde, eine hydraulische Strömungsmaschine der eingangs genannten Art derart zu gestalten, dass die Gestehungskosten verringert und das Umweltrisiko durch einen ungewollten Ölaustritt verringert werden. Erreicht wird dieses Ziel dadurch, dass durch die erfindungsgemäße Vorrichtung einerseits der Servomotor kleiner ausgeführt werden kann und andererseits dass die benötigte Ölmenge reduziert wird, wodurch im Schadensfall das Umweltrisiko verringert wird. Proportional zur benötigten Ölmenge verringern sich auch die Kosten für die Ölanlage (z.B. beim Kolbenspeicher bzw. Windkessel).

Diese Aufgabe wird durch die Merkmale des unabhängigen Anspruchs gelöst. Weitere vorteilhafte Ausführungsformen befinden sich in den davon abhängigen Ansprüchen.

Die Erfinder haben erkannt, dass die Größe der zur Verstellung des Regelrings verwendeten Servomotoren von dem maximal auf der Leitschaufel auftretenden Moment bestimmt wird. Dieses Moment bestimmt den Durchmesser bzw. die Kolbenfläche der Servomotoren. Die Kolbenfläche der Servomotoren muss so groß sein, dass sie bei gegebenem minimalen Druck der Hydraulikflüssigkeit dieses Moment aufbringen können. Sie haben weiter erkannt, dass dieses maximale Moment nur an einem Ende des Verstellweges des Regelrings auftritt.

Dieser Sachverhalt und die erfinderische Lösung soll nun anhand der Figuren erläutert werden.

Es zeigen:
- Figur 1: hydraulischer Servomotor zum Verdrehen eines Regelrings einer hydraulischen Maschine gemäß dem Stand der Technik;
- Figur 2: erfindungsgemäßer hydraulischer Servomotor zum Verdrehen eines Regelrings einer hydraulischen Maschine in der ersten Endstellung;
- Figur 3: erfindungsgemäßer hydraulischer Servomotor zum Verdrehen eines Regelrings einer hydraulischen Maschine in einer Mittelstellung;
- Figur 4: erfindungsgemäßer hydraulischer Servomotor zum Verdrehen eines Regelrings einer hydraulischen Maschine in der zweiten Endstellung;
- Figur 5: erfindungsgemäßer hydraulischer Servomotor in einer weiteren Ausführungsform.

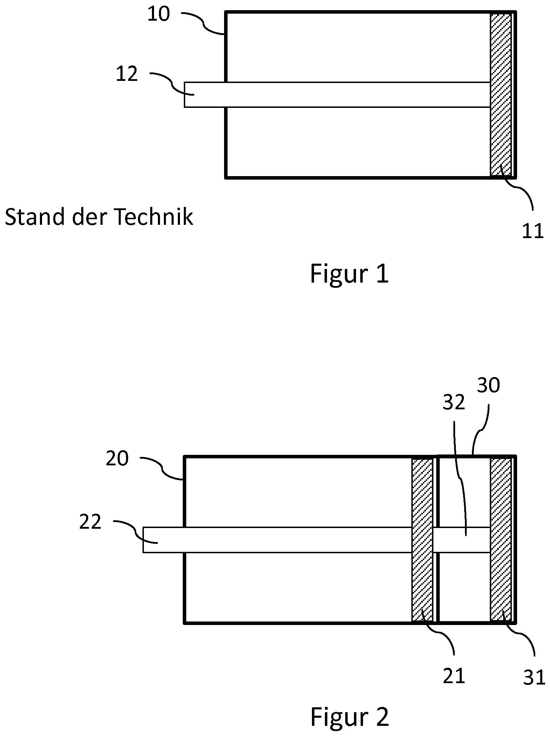

Figur 1 zeigt einen Schnitt durch einen Servomotor, wie er sich in einer hydraulischen Maschine gemäß dem Stand der Technik befindet. Der Servomotor weist ein zylindrisches Gehäuse 10 auf, in dem sich ein Kolben 11 mit einer formschlüssig mit dem Kolben 11 verbundenen Stange 12 befindet. Kolben 11 und Stange 12 sind dabei innerhalb des Gehäuses 10 frei verschiebbar angebracht. Der Kolben 11 schließt umfänglich mit dem Gehäuse dichtend ab, so dass innerhalb des Gehäuses zwei Kammern entstehen, die jeweils mit unter Druck stehender Hydraulikflüssigkeit gefüllt werden können. In bekannter Weise kann mit Hilfe der Hydraulikflüssigkeit der Kolben 11 mit Stange 12 hin und her bewegt werden.

Innerhalb der hydraulischen Maschine wird dabei der Servomotor so zwischen Regelring und dem feststehendem Gehäuse der Maschine angebracht, dass durch eine Verschiebung des Kolbens 11 der Regelring verdreht werden kann. Dies ist jedoch in der Figur 1 nicht dargestellt.

Bei gegebenen maximalem Druck der verwendeten Hydraulikflüssigkeit ist das maximale Moment, das vom Servomotor auf den Regelring übertragen werden kann, proportional zur Fläche des Kolbens 11, so dass wie bereits beschrieben das zylindrische Gehäuse des Servomotors entsprechend dem maximal benötigtem Moment dimensioniert werden muss. Entsprechend groß werden dann auch das Volumen des Servomotors und somit auch die Menge des benötigten Hydrauliköls.

Die erfinderische Idee besteht nun darin den Servomotor in besonders zweckmäßiger Weise mehrstufig auszuführen, wobei für den Betriebsbereich, in dem nur ein geringes Moment benötigt wird, nur eine Stufe des Servomotors verwendet wird, und in den Betriebsbereichen, die ein höheres Moment benötigen, sukzessive die weiteren Stufen hinzugenommen werden. Die Ausführung der weiteren Stufen ist grundsätzlich unabhängig von der Hauptstufe, d.h. Arbeitsdruck und Durchmesser sind nicht an die Hauptstufe gebunden.

Besonders einfach ist der Fall, wenn der gesamte Betriebsbereich nur in zwei Teilbereiche zerfällt. Erfahrungsgemäß ist dies bei vielen hydraulischen Maschinen der Normalfall. Es gibt meistens einen großen Bereich, der nur ein vergleichsweise geringes Moment erfordert, und einen kleineren Bereich, in dem ein bis zu doppelt so hohes Moment benötigt wird. Die Begriffe "groß" und "klein" im vorigen Satz beziehen sich dabei auf die in den genannten Bereichen zu bewältigenden Verstellwege des Servomotors.

Für den im letzten Abschnitt genannten Fall ist der erfindungsgemäße Servomotor zweistufig aufgebaut. Eine mögliche Ausführungsform ist in Figur 2 im Schnitt dargestellt. Der erfindungsgemäße Servomotor weist zwei miteinander verbundene Gehäuseteile 20 und 30 auf, die jeweils einen Kolben (21 und 31) und jeweils eine mit dem jeweiligen Kolben formschlüssig verbundene Stange (22 und 32) umfassen. Dabei ist das linke Gehäuse 20 wesentlich länger als das rechte Gehäuse 30. Wie weiter unten noch beschrieben wird, entspricht die Gehäuselänge den unterschiedlich großen Verstellwegen in den beiden Betriebsteilbereichen. Der in Figur 2 dargestellte erfindungsgemäße Servomotor befindet sich in einer Stellung, in der die aus dem Gesamtgehäuse herausragende Stange 22 weitest möglich eingefahren ist, was dem einen Ende des Betriebsbereichs entspricht. Wenn nun die beiden jeweils rechts von den Kolben 21 und 31 liegenden Kammern der Teilgehäuse 20 und 30 mit unter geeignetem Druck stehender Hydraulikflüssigkeit gefüllt werden, werden sich die Kolben 21 und 31 jeweils nach links bewegen und die Stange 22 wird sich aus dem Gesamtgehäuse heraus bewegen. Dabei wirken die Kolben 21 und 31 zusammen, d.h. die von beiden aufgebrachten Kräfte addieren sich und entsprechend hoch ist das auf den Regelring übertragene Moment. Das maximale Moment, das auf diese Weise aufgebracht werden kann, ist proportional zur hydraulisch wirksamen Fläche der Kolben 21 und 31 in Summe.

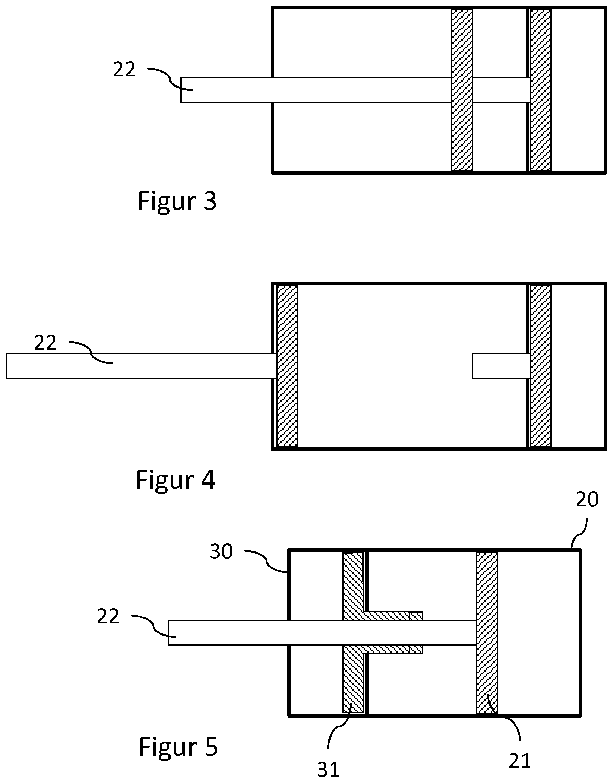

In Figur 3 ist der erfindungsgemäße Servomotor aus Figur 2 in einer anderen Stellung dargestellt. Die Teile sind dieselben wie in Figur 2 und die Bezugszeichen sind der Übersichtlichkeit halber weggelassen worden. Die aus dem Gehäuseteil 30, dem Kolben 31 und der Stange 32 bestehende Servomotorstufe ist komplett ausgefahren, d.h. der Kolben 31 befindet sich nun ganz auf der linken Seite des Teilgehäuses 30. In den Zuständen, die zwischen den in Figur 2 und 3 gezeigten Zuständen liegen, wirken die Kolben 21 und 31 zusammen. Soll die Stange 22 noch weiter nach links bewegt werden als in Figur 3 dargestellt, so kann dies nur noch geschehen, wenn der Kolben 21 unabhängig vom Kolben 31 weiter nach links geschoben wird. Das ist nur möglich, wenn zwischen Kolben 21 und Stange 32 keine formschlüssige Verbindung besteht. Kolben 21 und Stange 32 stehen daher in den in Figur 2 und 3 und allen dazwischen liegenden Zuständen in kraftschlüssiger Verbindung. Es ist klar, dass das Zusammenwirken der beiden Servomotorstufen auf diese Weise nur in einer Richtung zustande kommt, und zwar im in Figur 2 und 3 dargestellten Fall nur wenn die Stange 22 aus dem Gesamtgehäuse herausgeschoben wird. Dabei müssen die Drücke der Hydraulikflüssigkeit in den Teilgehäusen 20 und 30 entsprechend gewählt werden, dass sich Kolben 21 und Stange 32 permanent in kraftschlüssiger Verbindung befinden, was einfach zu erfüllen ist, solange der Druck rechts von Kolben 31 grösser ist als links davon. Dass das Zusammenwirken der Kolben 21 und 31 nur in einer Richtung wirkt, stellt aber im Betrieb einer erfindungsgemäßen hydraulischen Maschine kein Problem dar, da das maximale Moment nur in einer Richtung übertragen werden muss. Für die Bewegung in die andere Richtung reicht die Kraft von der Fläche links vom Kolben 21 aus, sodass eine Zusatzkraft von Kolben 31 nicht benötigt wird.

In Figur 4 ist derselbe erfindungsgemäße Servomotor in einer Stellung dargestellt, bei der die Stange 22 weitest möglich aus dem Gesamtgehäuse ausgefahren ist, was dem anderen Ende des Betriebsbereichs entspricht (bezogen auf den in Figur 2 beschriebenen Zustand). Der Kolben 21 ist nun getrennt von der Stange 32. In allen Zuständen, die zwischen den Zuständen aus Figur 3 und Figur 4 liegen, ist der Kolben 21 von der Stange 32 getrennt. Somit wirkt in diesen Zuständen der Kolben 21 unabhängig vom Kolben 31. Das übertragene Moment ist somit nur noch proportional zur Fläche von Kolben 21 allein.

Abschließend zu der in Figur 2 bis 4 dargestellten Ausführungsform ist zu sagen, dass die durchlaufenen Verstellwege in den beiden Betriebsbereichen unterschiedlich groß sind, da die Servomotorstufen unterschiedlich lang sind. Der Betriebsbereich, in dem die beiden Stufen zusammenwirken (zwischen Figur 2 und Figur 3) hat einen viel kleineren zu durchlaufenden Verstellwegsbereich, verglichen mit dem Betriebsbereich, in dem nur die linke Servomotorstufe alleine wirkt (zwischen Figur 3 und Figur 4). Dies entspricht der in den meisten hydraulischen Maschinen vorliegenden Gegebenheit, dass das hohe Moment nur über einen kleineren Verstellwegsbereich benötigt wird. Es sind jedoch auch Fälle denkbar, in denen die beiden Bereiche (ein Bereich in dem beide Stufen zusammenwirken und ein Bereich in dem nur einer allein wirkt) in etwa gleich große Anteile des gesamten Verstellweges benötigen, oder dass sogar das umgekehrte Verhältnis vorliegt (d.h. dass der Bereich des Zusammenwirkens einen größeren Anteil des Verstellweges umfasst als der Bereich, in dem nur einer allein wirkt). Dann müssen die Längen der Servomotorstufen entsprechend gewählt werden. Wenn die beiden Servomotorstufen im dargestellten Beispiel (Figur 2 bis 4) beide dieselbe Länge aufweisen würden, dann würden die beiden Stufen über dem gesamten Verstellwegsbereich zusammenwirken. Daher ist eine Stufe, die nur über einen begrenzten Verstellwegsbereich wirksam sein soll, stets kürzer als die Stufe, die über den gesamten bzw. über einen größeren Verstellwegsbereich wirkt. Die Länge der kürzeren Stufe bestimmt dabei die Länge des Verstellwegs, über den die beiden Stufen zusammenwirken.

Aus dem gesagten wird auch klar, dass der erfindungsgemäße Servomotor ausgehend vom maximal benötigtem Moment, das übertragen werden muss, nur einen deutlich kleineren Durchmesser benötigt. Da die Flächen der beiden Kolben 21 und 31 zusammenwirken, kann der Durchmesser im Vergleich mit dem Stand der Technik fast um den Faktor 1/Wurzel(2) verkleinert werden (im Zusammenwirken ist die hydraulisch wirksame Fläche von Kolben 21 um die Querschnittsfläche der Stange 32 kleiner als die hydraulisch wirksame Fläche von Kolben 31 - daher ist der Faktor nicht ganz 1/Wurzel(2)). Auch die Menge an benötigtem Hydrauliköl ist deutlich geringer als beim Stand der Technik, da das Zusammenwirken der beiden Servomotorstufen sich nur über einen Teil des Verstellweges erstreckt.

In Figur 5 ist eine andere mögliche Ausführungsform des erfinderischen Servomotors dargestellt. Die beiden Servomotorstufen sind dabei örtlich vertauscht. Diese Ausführungsform ist dann zweckmäßig, wenn das maximal zu übertragende Moment auf der anderen Seite des Betriebsbereichs auftritt. Im Fall der Figuren 2 bis 4 tritt das maximale Moment auf, wenn die Stange 22 ganz eingefahren ist. Die beiden Kolben wirken dort zusammen, wenn die Stange 22 von diesem Zustand ausgehend ausgefahren wird. Im Fall von Figur 5 tritt das maximale Moment auf, wenn die Stange 22 ganz ausgefahren ist. Hier wirken die beiden Kolben zusammen, wenn die Stange 22 ausgehend von diesem Zustand eingefahren wird. Nur dann gibt es eine kraftschlüssige Verbindung der beiden Kolben. Das Analogon zur Stange 32 aus Figur 2 wird in Figur 5 durch die rohrförmige Auskragung von Kolben 31 gebildet, welcher die Stange 22 umschließt. Der in Figur 5 dargestellte Zustand entspricht einem Zustand in dem nur der Kolben 21 wirkt.

Mehr als zweistufige erfindungsgemäße Servomotoren sind ebenfalls denkbar und können die oben genannten Verbesserungen noch weiter vergrößern. In den meisten Fällen wird jedoch bereits mit einer zweistufigen Ausführungsform eine zufriedenstellende Verbesserung erreicht werden.

Außerdem ist es ebenfalls denkbar die beiden Ausführungsformen (d.h. die in Figur 2 bis 4 gezeigte mit der aus Figur 5) in der Weise zu kombinieren, dass sowohl rechts als auch links von der permanent wirksamen Servomotorstufe jeweils eine nur auf einem Teilbereich wirksame Servomotorstufe angebracht ist.

Wasserkraftwerke mit Laufrädern vom Typ Kaplan stellen insofern eine Besonderheit dar, dass sie doppelt reguliert sind, d.h. der Betriebszustand wird nicht nur durch das Öffnen und Schließen des Leitapparates beeinflusst, sondern auch durch das Verstellen der Laufradschaufeln. Für das Verstellen der Laufradschaufeln wird in der Regel ebenfalls ein hydraulischer Servomotor verwendet, und es treten dabei ähnliche Anforderungen bzgl. des aufzubringenden Momentes auf, wie bei den bisher beschriebenen Servomotoren zum Verstellen des Leitapparates. Die beschriebene erfindungsgemäße Anordnung von Servomotorstufen, kann daher ganz analog zum Verstellen der Laufschaufeln eines Kaplan-Laufrades verwendet werden.

Abschließend sei noch erwähnt, dass die erfindungsgemäße Vorrichtung auch Vorteile im Hinblick auf die Betriebssicherheit bietet, z.B. wenn die einzelnen Servomotorstufen unabhängig voneinander mit Hydraulikflüssigkeit beaufschlagt werden. So kann z.B. eine Servomotorstufe, die nur auf einem Teilbereich des gesamten Verstellweges wirkt aus einem separaten Windkessel gespeist werden. Auf diese Weise erhält man ein zusätzliches unabhängiges Schließsystem für das Wasserkraftwerk.

## Patentansprüche

1. Hydraulische Strömungsmaschine mit einem von Wasser beaufschlagten Laufrad, mit einem Leitapparat mit einer Vielzahl von Leitschaufeln, welcher einen Regelring zum Verdrehen der Leitschaufeln umfasst, und mit wenigstens einen hydraulischen Servomotor, **dadurch gekennzeichnet, dass** der wenigstens eine Servomotor mehrstufig ausgeführt ist, wobei die Gehäuse (20,30) der Stufen fest miteinander verbunden sind und die Kolben (21,31) der Stufen nur auf einem Teilbereich des gesamten Verstellbereichs zusammenwirken.

2. Hydraulische Strömungsmaschine gemäß Anspruch 1, **dadurch gekennzeichnet, dass** der wenigstens eine hydraulische mehrstufige Servomotor bei Betätigung den Regelring verdreht.

3. Hydraulische Strömungsmaschine gemäß Anspruch 1 oder 2, **dadurch gekennzeichnet, dass** das Laufrad vom Typ Kaplan ist und der wenigstens eine hydraulische mehrstufige Servomotor bei Betätigung die Laufradschaufeln bewegt.

4. Hydraulische Strömungsmaschine gemäß einem der Ansprüche 1 bis 3, **dadurch gekennzeichnet, dass** im Teilbereich des gesamten Vestellbereiches, in dem die Kolben der Stufen zusammenwirken, das Zusammenwirken von benachbarten Stufen durch eine kraftschlüssige Verbindung des jeweiligen Kolbens mit der Stange der benachbarten Stufe zustande kommt.

5. Hydraulische Strömungsmaschine gemäß einem der Ansprüche 1 bis 3, **dadurch gekennzeichnet, dass** im Teilbereich des gesamten Vestellbereiches, in dem die Kolben der Stufen zusammenwirken, das Zusammenwirken von benachbarten Stufen durch eine kraftschlüssige Verbindung des jeweiligen Kolbens mit einer rohrförmigen Auskragung des Kolbens der benachbarten Stufe zustande kommt.

## Claims

1. Hydraulic turbomachine having an impeller which is loaded by water, having a diffuser with a multiplicity of guide blades, which diffuser comprises a regulating ring for rotating the guide blades, and having at least one hydraulic servomotor, **characterized in that** the at least one servomotor is of multiple stage configuration, the housings (20, 30) of the stages being connected fixedly to one another, and the pistons (21, 31) of the stages interacting only in a part range of the entire adjusting range.

2. Hydraulic turbomachine according to Claim 1, **characterized in that** the at least one hydraulic multiple stage servomotor rotates the regulating ring upon actuation.

3. Hydraulic turbomachine according to Claim 1 or 2, **characterized in that** the impeller is of the Kaplan type, and the at least one hydraulic multiple stage servomotor moves the impeller blades upon actuation.

4. Hydraulic turbomachine according to one of Claims 1 to 3, **characterized in that**, **in that** part range of the entire adjusting range, in which the pistons of the stages interact, the interaction of adjacent stages comes about by way of a non-positive connection of the respective piston to the rod of the adjacent stage.

5. Hydraulic turbomachine according to one of Claims 1 to 3, **characterized in that**, **in that** part range of the entire adjusting range, in which the pistons of the stages interact, the interaction of adjacent stages comes about by way of a non-positive connection of the respective piston to a tubular protrusion of the piston of the adjacent stage.

## Revendications

1. Turbomachine hydraulique avec une roue mobile actionnée par l'eau, avec un appareil directeur comprenant une multiplicité d'aubes directrices, qui comprend une bague de réglage pour faire tourner les aubes directrices, et avec au moins un servomoteur hydraulique, **caractérisée en ce que** ledit au moins un servomoteur est réalisé à plusieurs étages, dans laquelle les boîtiers (20, 30) des étages sont assemblés fixement l'un à l'autre et les pistons (21, 31) des étages ne coopèrent que sur une région partielle de toute la zone de déplacement.

2. Turbomachine hydraulique selon la revendication 1, **caractérisée en ce que** ledit au moins un servomoteur hydraulique à plusieurs étages fait tourner la bague de réglage lors de son actionnement.

3. Turbomachine hydraulique selon la revendication 1 ou 2, **caractérisée en ce que** la roue mobile est du type Kaplan et ledit au moins un servomoteur hydraulique à plusieurs étages déplace lors de son actionnement les aubes de la roue mobile.

4. Turbomachine hydraulique selon l'une quelconque des revendications 1 à 3, **caractérisée en ce que** dans la région partielle de toute la zone de déplacement, dans laquelle les pistons des étages coopèrent, la coopération d'étages voisins est assurée par une liaison par adhérence du piston respectif avec la tige de l'étage voisin.

5. Turbomachine hydraulique selon l'une quelconque des revendications 1 à 3, **caractérisée en ce que** dans la région partielle de toute la zone de déplacement, dans laquelle les pistons des étages coopèrent, la coopération d'étages voisins est assurée par une liaison par adhérence du piston respectif avec une extension tubulaire du piston de l'étage voisin.
